(19) Europäisches Patentamt / European Patent Office / Office européen des brevets

(11) **EP 4 697 445 A1**

(12) **EUROPEAN PATENT APPLICATION**
published in accordance with Art. 153(4) EPC

(43) Date of publication:
**18.02.2026 Bulletin 2026/08**

(21) Application number: **24913677.1**

(22) Date of filing: **27.12.2024**

(51) International Patent Classification (IPC):
$H01M\ 10/42^{(2006.01)}$ $H01M\ 10/052^{(2010.01)}$

(52) Cooperative Patent Classification (CPC):
**H01M 10/052; H01M 10/42**

(86) International application number:
**PCT/KR2024/021278**

(87) International publication number:
**WO 2025/143872 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.12.2023 KR 20230192121**

(71) Applicant: **LG Energy Solution, Ltd.**
**Seoul 07335 (KR)**

(72) Inventors:
• **KO, Minjin**
**Daejeon 34122 (KR)**

• **KWON, Yohan**
**Daejeon 34122 (KR)**
• **LEE, Jaewook**
**Daejeon 34122 (KR)**
• **PARK, Seungwon**
**Daejeon 34122 (KR)**
• **MIN, Jiwon**
**Daejeon 34122 (KR)**
• **PARK, Junhyoung**
**Daejeon 34122 (KR)**
• **MIN, Kyeongjun**
**Daejeon 34122 (KR)**

(74) Representative: **Hoffmann Eitle**
**Patent- und Rechtsanwälte PartmbB**
**Arabellastraße 30**
**81925 München (DE)**

(54) **ELECTRODE, AND LITHIUM SECONDARY BATTERY AND BATTERY PACK COMPRISING SAME**

(57) The present specification relates to an electrode including an electrode current collector layer; an electrode active material layer; and a functional layer interposed between the electrode current collector layer and the electrode active material layer, in which the functional layer includes a specific type of flameretardant binder and has a limiting oxygen index of 30% or more, and also relates to a lithium secondary battery including the same and a battery pack.

The electrode according to the exemplary embodiment can prevent thermal runaway while ensuring battery characteristics.

[Figure 1]

**Description**

[Technical Field]

The present application relates to an electrode, a lithium secondary battery including the same, and a battery pack.

This application claims priority to and the benefit of Korean Patent Application Nos. 10-2023-0192121 and 10-2024-0197936 filed in the Korean Intellectual Property Office on December 27, 2023 and December 27, 2024, the entire contents of which are incorporated herein by reference.

[Background Art]

A secondary battery is a battery that can be recharged and reused even after being discharged. The secondary battery can be used as an energy source for small devices, such as mobile phones, tablet PCs, and vacuum cleaners, as well as an energy source for medium and large devices, such as an energy storage system (ESS) for personal mobilities, automobiles, and smart grids.

In order to be utilized in such a wide range of applications, secondary batteries are required to have high performance. As a result of extensive research and development, lithium secondary batteries, which provide high energy density, ease of processing, and applicability in various electronic devices, have gained significant attention.

However, lithium secondary batteries are not only vulnerable to external impacts but also prone to internal deterioration, which can result in frequent ignition. These problems can cause significant damage by causing heat transfer among multiple battery cells, resulting in thermal runaway in assembly units such as battery modules or battery packs connected in series and/or parallel.

Specifically, when the internal temperature of a lithium secondary battery exceeds a certain temperature, the pressure inside the cell may rise as an electrolyte vaporizes, potentially causing leakage of the electrolyte from the cell or damage to the separator. When flammable gaseous substances are ignited or the separator is damaged due to the vaporization of the electrolyte, an internal short circuit may be caused, leading to heating of adjacent cells. This may result in undesirable continuous or chain-like exothermic reactions, which progress to ignition, causing the fire to spread throughout the battery pack. However, lithium ions have high reactivity to water, so even attempting to extinguish the fire with water may cause the fire to spread further.

To solve the above problems, research is being conducted on materials that can block or suppress, at an early stage, the occurrence of undesirable continuous or chain-like exothermic reactions in electrode units.

[Detailed Description of the Invention]

[Technical Problem]

The present inventors have completed an electrode having features of interposing a functional layer, including a flame-retardant binder having a limiting oxygen index of 30% or more, between a current collector and an electrode active material layer in the electrode, and limiting the flame-retardant binder to a specific type, thereby enabling heat transfer and thermal runaway to be blocked between cells in advance while maintaining the intended battery characteristics.

Specifically, the present specification is intended to provide an electrode having the above features, a lithium secondary battery including the same, and a battery pack.

[Technical Solution]

An exemplary embodiment of the present specification provides an electrode including an electrode current collector layer; an electrode active material layer; and a functional layer interposed between the electrode current collector layer and the electrode active material layer, in which the functional layer includes a flame-retardant binder having a limiting oxygen index of 30% or more as measured in accordance with ASTM D2863, and the flame-retardant binder is one or more selected from a phenolic resin, a novolac resin, a polyimide resin, a polybenzoxazole resin, a polybenzimidazole resin, a polybenzothiazole resin, and a halogenated aromatic resin.

Another exemplary embodiment of the present specification provides a lithium secondary battery including a first electrode; a second electrode; a separator interposed between the first electrode and the second electrode; and an electrolyte, in which at least one of the first electrode and the second electrode is the electrode described above.

Still another exemplary embodiment of the present specification provides a battery pack including the above-described lithium secondary battery as a unit cell.

[Advantageous Effects]

An electrode according to an exemplary embodiment of the present invention interposes a functional layer, which includes a flame-retardant binder within a specific range and satisfying a high limiting oxygen index, between an electrode current collector layer and an electrode active material layer, while maintains characteristics, such as long life and low cell resistance, thereby making self-combustion of the electrode by oxygen or combustion with other elements of the battery in the future difficult and preventing additional thermal runaway or delaying the time required for thermal runaway. Furthermore, compared to flame-retardant electrolytes, the electrode according to the present invention is cost-effective, easier to apply to processes, and effective in suppressing side reactions.

[Brief Description of Drawings]

FIG. 1 is a schematic view of an electrode according to an exemplary embodiment of the present invention.
FIGS. 2 and 3 are schematic views of a lithium secondary battery according to an exemplary embodiment of the present invention.
FIG. 4 is a schematic view of a battery pack according to an exemplary embodiment of the present invention.
FIG. 5 is a schematic view of a moving means including the battery pack according to an exemplary embodiment of the present invention.

<Explanation of Reference Numerals and Symbols>

1: electrode current collector layer
2: functional layer
3: electrode active material layer
10: electrode
10-1: first electrode
10-2: second electrode
11: separator
20: lithium secondary battery (cross-section)
100: lithium secondary battery
201: housing
300: battery pack
400: moving means

[Best Mode]

Before describing the present invention, some terms are first defined.
In the present specification, 'p to q' may refer to a range of 'p or more and q or less'.
In the present specification, when a part is described as 'including' or 'having' a certain component, unless otherwise specified, it may mean that the part may further include other components rather than excluding other components.
In the present specification, singular expressions include plural expressions, unless otherwise specified.
Unless otherwise defined, all terms used herein, including technical and scientific terms, have the same meanings as commonly understood by one skilled in the art to which the present invention pertains. Terms, such as those defined in commonly used dictionaries, should be interpreted as having a meaning consistent with their meaning in the context of the relevant art and should not be interpreted in an idealized or overly formal sense unless explicitly so defined in the present application.
Hereinafter, exemplary embodiments of the present invention will be described in detail with reference to the drawings so that one skilled in the art can readily implement the present invention. However, the present invention may be implemented in various different forms, and is not limited to the following descriptions.

**<Electrode>**

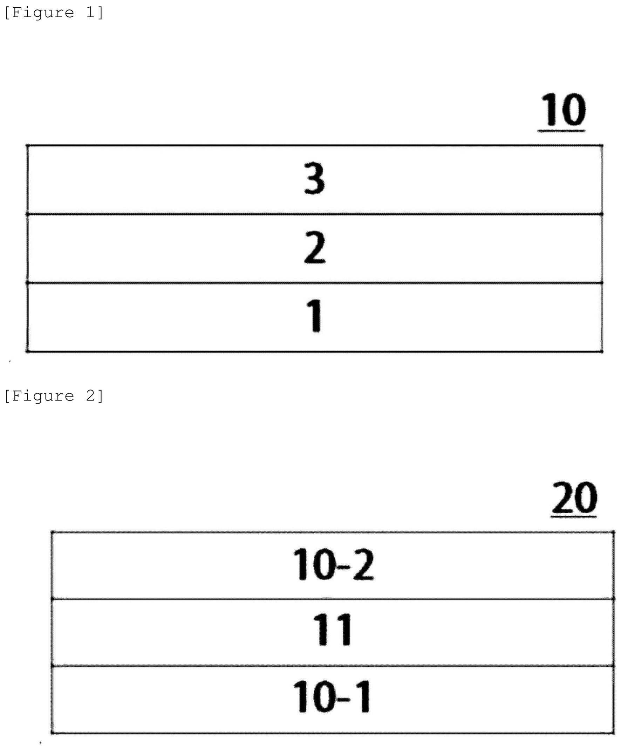

Below, an electrode 10 will be described with reference to FIG. 1.

An electrode according to an exemplary embodiment of the present specification includes a functional layer interposed between an electrode current collector layer and an electrode active material layer, in which the functional layer includes a flame-retardant binder having a limiting oxygen index of 30% or more as measured in accordance with ASTM D2863, and the flame-retardant binder is one or more selected from a phenolic resin, a novolac resin, a polyimide resin, a polybenzoxazole resin, a polybenzimidazole resin, a polybenzothiazole resin, and a halogenated aromatic resin.

FIG. 1 shows an electrode 10 according to an exemplary embodiment of the present invention, and it can be confirmed that a functional layer 2, which includes a specific type of flame-retardant binder having a limiting oxygen index of 30% or more, is provided between an electrode current collector layer 1 and an electrode active material layer 3.

In the present specification, the limiting oxygen index (LOI) is the minimum oxygen volume fraction (%) required to sustain combustion, and can be calculated by the following Formula 1.

[Formula 1]

$$LOI(\%) = \frac{O_2}{O_2 + N_2} \times 100(\%) = \frac{volume\ of\ O_2}{volume\ of\ entire\ mixed\ gases} \times 100(\%)$$

In addition, when measuring LOI in accordance with the ASTM D2863 method, a measurement target (flame-retardant binder) may be prepared as a specimen according to Test Specimen Type IV (70 X 6.5 X 3 $mm^3$).

The functional layer 2 includes a flame-retardant binder having a high limiting oxygen index and in a specific range, and due to the low combustibility of the flame-retardant binder, makes self-combustion of the electrode or combustion with other elements of the battery in the future by oxygen difficult, thereby preventing additional thermal runaway or delaying the time required for thermal runaway.

As described above, when a flame-retardant binder of a specific type having a high limiting oxygen index of 30% or more is used, the flame retardancy of the functional layer makes combustion difficult to occur when the electrode ignites, and suppresses heat transfer to the electrode current collector layer, thereby delaying the melting or combustion of the electrode current collector layer and the time required for thermal runaway.

According to an exemplary embodiment of the present specification, a thickness of the electrode current collector layer may be 3 $\mu$m or more and 30 $\mu$m or less.

Depending on the type of electrode current collector layer, the thickness of the electrode current collector layer may be adjusted, and the thickness of the negative electrode current collector layer using a material such as copper may be preferably changed to 5 $\mu$m or more or 6 $\mu$m or more and 25 $\mu$m or less or 20 $\mu$m or less, and the thickness of the positive electrode current collector layer using a material such as aluminum may be preferably changed to 7 $\mu$m or more or 8 $\mu$m or more and 25 $\mu$m or less or 20 $\mu$m or less.

According to an exemplary embodiment of the present specification, a thickness of the entire electrode may be 30 $\mu$m or more and 200 $\mu$m or less.

Depending on the electrode type, the thickness of the entire electrode may be adjusted. For example, for the negative electrode, the thickness may be preferably changed to 40 $\mu$m or more or 50 $\mu$m or more and 170 $\mu$m or less or 150 $\mu$m or less, and for the positive electrode, the thickness may be preferably changed to 40 $\mu$m or more or 50 $\mu$m or more and 120 $\mu$m or less or 100 $\mu$m or less.

According to an exemplary embodiment of the present specification, a thickness of the functional layer may be 0.1 $\mu$m or more and 10 $\mu$m or less.

When the above thickness range is satisfied, the flame retardancy expression is maximized while minimizing the increase in electrode thickness due to the functional layer, so the intended thermal runaway prevention effect can be obtained.

The upper limit of the thickness of the functional layer can be adjusted according to the needs, such as conductivity and heat dissipation characteristics, and preferably may be changed to 5 $\mu$m or less, 4 $\mu$m or less, or 3 $\mu$m or less.

According to an exemplary embodiment of the present specification, the functional layer may further include a flame-retardant.

According to an exemplary embodiment of the present specification, the functional layer may include a flame-retardant binder in an amount of more than 0 part by weight and 50 parts by weight or less based on 100 parts by weight of a total slurry included in the functional layer.

When the flame-retardant binder falls within the specific content range, it is excellent in preventing thermal runaway.

According to an exemplary embodiment of the present specification, the functional layer may include a conductive material in an amount of 0.1 part by weight or more and 90 parts by weight or less based on 100 parts by weight of the total slurry included in the functional layer.

As long as the conductive material falls within the specific content range, it is excellent in terms of electrical conductivity within the electrode; however, in order to further improve the conductivity, in some cases, the conductive material may be included in an amount of 10 parts by weight or more, 20 parts by weight or more, 30 parts by weight or more, 40 parts by weight or more, or 50 parts by weight or more, and 85 parts by weight or less, or 80 parts by weight or less, based on 100 parts by weight of the total slurry included in the functional layer.

In the present specification, the slurry included in the functional layer may refer to a mixture of a flame-retardant binder and a solvent for forming the functional layer.

In the present specification, the solvent for forming the functional layer may be, but is not limited to, N-methyl-2-pyrrolidone (NMP), water, or the like.

According to an exemplary embodiment of the present specification, the functional layer may include a flame-retardant binder in an amount of 1 part by weight or more and 99 parts by weight or less based on 100 parts by weight of the total slurry included in the functional layer.

As long as the flame-retardant binder falls within the specific content range, the thermal runaway problem can be improved; however, in order to further prevent thermal runaway, in some cases, the flame-retardant binder may be included in an amount of 10 parts by weight or more, 15 parts by weight or more, 20 parts by weight or more, or 25 parts by weight or more, and 90 parts by weight or less, 70 parts by weight or less, or 50 parts by weight or less, based on 100 parts by weight of the total slurry included in the functional layer.

According to an exemplary embodiment of the present specification, the functional layer may include 0.1 to 90 parts by weight of a conductive material; and 1 to 99 parts by weight of a flame-retardant binder.

According to an exemplary embodiment of the present specification, the flame-retardant may include an inorganic flame-retardant, an organic flame-retardant, or a combination thereof.

In the present specification, the inorganic flame-retardant may be selected from a silicon-based flame-retardant, an aluminum-based flame-retardant, a molybdenum-based flame-retardant, and the like, but any inorganic flame-retardant known in the art may be used as long as it does not depart from the scope of the present invention.

In the present specification, the organic flame-retardant may be selected from a carbon-based flame-retardant, a halogen-based flame-retardant, a phosphorus-based flame-retardant, a nitrogen-based flame-retardant, and the like, but any organic flame-retardant known in the art may be used as long as it does not depart from the scope of the present invention.

According to an exemplary embodiment of the present specification, the conductive material may be at least one of a planar conductive material, a linear conductive material, and a point-like conductive material.

In the present specification, the planar conductive material serves to improve conductivity by increasing surface contact with other elements within the functional layer, and may be expressed as a plate-like or bulk-type conductive material. Examples of the planar conductive material in terms of the functional layer may be selected from graphene, graphene oxide, and the like, but may preferably be graphene.

In the present specification, the linear conductive material may be a carbon nanotube. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet in the shape of a cylinder with a nanoscale diameter and has an $sp^2$ bonding structure. In this case, the characteristics of a conductive material or a semiconductive material may be exhibited depending on the rolled angle and structure of the graphite sheet. The bundle-type carbon nanotubes can be uniformly dispersed compared to entangled type carbon nanotubes, and can smoothly form a conductive network within a functional layer, thereby further improving conductivity.

In the present specification, the point-like conductive material may be selected from natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, a polyphenylene derivative, and the like, but any material known in the art may be used as long as it does not depart from the scope of the present invention.

According to an exemplary embodiment of the present specification, the flame-retardant binder may include a polymer including an aromatic hydrocarbon ring and a heterocycle, a halogen-substituted polymer, and the like. Alternatively, the flame-retardant binder may be one or more selected from the group consisting of a phenolic resin, a novolac resin, a polyimide resin, a polybenzoxazole (PBO) resin, a polybenzimidazole resin, a polybenzothiazole (PBT) resin, and a halogenated aromatic resin.

The functional layer including the flame-retardant binder can further prevent thermal runaway.

According to an exemplary embodiment of the present specification, a vertical resistance of the functional layer may be 0.5 Ω or less. When the vertical resistance of the functional layer satisfies the upper limit, the problem of conductive connectivity caused by the introduction of the functional layer can be prevented, and it is excellent in terms of electrical conductivity. The lower limit of the vertical resistance of the functional layer is not particularly limited as long as it is 0 Q;

however, the vertical resistance is preferably at least 0.1 $\Omega$ or more in order for the functional layer to maintain the intended conductivity between the electrode current collector layer and the electrode active material layer.

In the present specification, the vertical resistance refers to a resistance value $\Omega$ measured in the vertical direction by positioning conductive loads (e.g., a metal circular block plated with Au on a Cu metal surface) above and below a target material, and the effect of the thickness on the functional layer is not large, but preferably, the same level of vertical resistance can be exhibited at a thickness of 0.1 $\mu$m or more and 10 $\mu$m or less.

According to an exemplary embodiment of the present specification, the functional layer may further include a heat-dissipating filler.

In the present specification, the heat-dissipating filler may be selected from graphene, expandable graphite, and the like, but any filler known in the art may be used as long as it does not depart from the scope of the present invention.

According to an exemplary embodiment of the present specification, the functional layer may further include graphene.

In the present specification, the graphene is included as a flame-retardant, a conductive material and/or a heat-dissipating filler.

According to an exemplary embodiment of the present specification, the functional layer may further include SWCNT.

According to an exemplary embodiment of the present specification, the functional layer may further include SWCNT (in addition to graphene).

In the present specification, the SWCNT is included as a conductive material.

### <Lithium Secondary Battery>

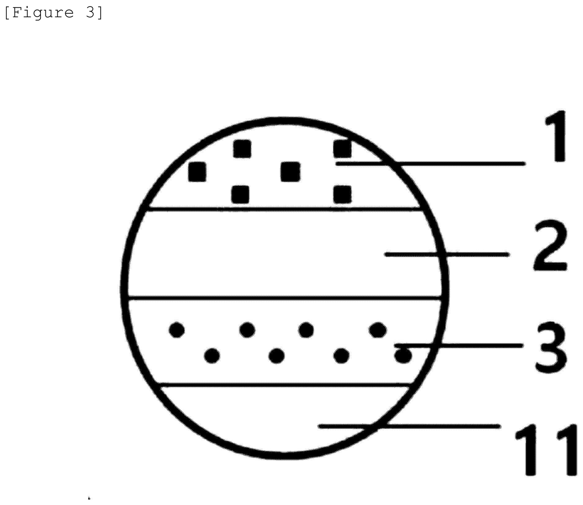

Below, a lithium secondary battery of FIGS. 2 and 3 will be described.

According to an exemplary embodiment of the present specification, a lithium secondary battery includes a first electrode; a second electrode; a separator interposed therebetween; and an electrolyte, in which one of the first electrode and the second electrode is the electrode described above.

The lithium secondary battery of the exemplary embodiment includes the electrode described above, and thus, factors that may cause thermal runaway with components of the lithium secondary battery can be blocked in advance.

Referring to FIG. 2, a separator 11 is interposed between a first electrode 10-1 and a second electrode 10-2, and at least one of the first electrode 10-1 and the second electrode 10-2 may be the electrode described above. Specifically, referring to FIG. 3, one surface of the separator 11 may be in contact with one surface of the electrode active material layer 3, one surface of the functional layer 2 may be in contact with the surface of the electrode active material layer 3 opposite to a surface in contact with the separator 11, and the electrode current collector layer 1 may be provided on a surface of the functional layer 2 opposite to the surface in contact with the electrode active material layer 3.

In the present specification, the first electrode may be a negative electrode and the second electrode may be a positive electrode, or the first electrode may be a positive electrode and the second electrode may be a negative electrode.

Accordingly, when the above-described electrode is a negative electrode, the electrode current collector layer may be referred to as a negative electrode current collector layer, and the electrode active material layer may be referred to as a negative electrode active material layer. The specific details are as follows.

In the present specification, the negative electrode current collector is not particularly limited as long as it has conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used.

In the present specification, the negative electrode current collector may typically have a thickness of 1 $\mu$m to 100 $\mu$m, and fine irregularities may be formed on a surface of the negative electrode current collector to increase the adhesive strength of the negative electrode active material. In addition, the negative electrode current collector may be used in various forms, such as a film, a sheet, a foil, a net, a porous body, a foamed body, a non-woven body, and the like.

In an exemplary embodiment of the present specification, the negative electrode active material layer may include at least one of a silicon-based active material and a carbon-based active material.

In an exemplary embodiment of the present specification, the negative electrode active material layer may include a carbon-based active material.

The carbon-based active material can prevent expansion caused by repeated charging and discharging in the negative electrode or lithium secondary battery of the present invention, thereby contributing to excellent cycle characteristics or improved battery life performance.

In an exemplary embodiment of the present specification, the negative electrode active material layer may include a silicon-based active material.

In general, silicon-based active materials are known to have a capacity that is 10 times or higher than that of carbon-based active materials. Accordingly, when a silicon-based active material is applied to a negative electrode, an electrode with a high level of energy density can be implemented even with a thin thickness.

In an exemplary embodiment of the present specification, the silicon-based active material may include one or more selected from the group consisting of $SiO_x$ (x=0), $SiO_x$ (0 < x < 2), a Si/C composite, and a Si alloy.

Note that $SiO_2$ may not react with lithium ions and thus not store lithium, thus x is preferably within the above range. The silicon-based active material may be Si or a Si/C composite composed of a composite of Si and C.

As necessary, the silicon-based active material may refer to a single material or a mixed material of two or more combined materials.

In an exemplary embodiment of the present specification, there is provided a negative electrode composition in which the silicon-based active material includes one or more selected from the group consisting of $SiO_x$ (x=0) and $SiO_x$ (0 < x < 2), and the $SiO_x$ (x=0) is included in an amount of 70 parts by weight or more based on 100 parts by weight of the silicon-based active material.

In an exemplary embodiment of the present specification, the silicon-based active material may include the $SiO_x$ (x=0) in an amount of 70 parts by weight or more, preferably 80 parts by weight or more, and more preferably 90 parts by weight or more and 100 parts by weight or less, preferably 99 parts by weight or less, and more preferably 95 parts by weight or less based on 100 parts by weight of the silicon-based active material.

The silicon-based active material according to the present specification includes the $SiO_x$ (x=0) in an amount of 70 parts by weight or more based on 100 parts by weight of the silicon-based active material, and compared to silicon-based active materials that mainly use $SiO_x$ (0 < x < 2) series compounds, the theoretical capacity of the silicon-based active material in the present specification can be achieved at a much higher level.

In an exemplary embodiment of the present specification, pure silicon (Si) may be used as the silicon-based active material. The use of pure silicon (Si) as the silicon-based active material may mean that, based on 100 parts by weight of the total silicon-based active material as described above, pure Si particles ($SiO_x$ (x=0)) not bonded to other particles or elements are included within the above range.

In an exemplary embodiment of the present specification, the negative electrode active material layer may further include a negative electrode conductive material and a negative electrode binder.

The negative electrode conductive material is used to impart conductivity to the electrode, and can be used without particular limitation as long as it has electronic conductivity without causing a chemical change in a battery. However, the negative electrode conductive material is applied to the negative electrode and has a completely separate configuration from a positive electrode conductive material that is applied to the positive electrode. That is, the negative electrode conductive material serves to support a contact point between silicon-based active materials, which undergo a large volume expansion of the electrode due to charging and discharging, whereas the positive electrode conductive material serves to impart partial conductivity while playing a buffer role as a cushioning role when rolled, so the configurations and roles of the negative electrode conductive material and the positive electrode conductive material are different from each other.

Specific examples of the negative electrode conductive material may include one or more selected from the group consisting of a point-like conductive material, a planar conductive material, and a linear conductive material.

Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black and/or artificial graphite in terms of implementing high conductivity and excellent dispersibility.

The planar conductive material may improve conductivity by increasing planar contact between silicon particles in the negative electrode, and at the same time, suppress disconnection of conductive paths due to volume expansion. The planar conductive material may be expressed as a plate-like conductive material or a bulk-type conductive material. Examples of the planar conductive material may include at least one selected from the group consisting of plate-like graphite, graphene, graphene oxide, and graphite flakes and may be preferably plate-like graphite.

The linear conductive material may be carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet in the shape of a cylinder with a nanoscale diameter and has an $sp^2$ bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present specification, there is provided the negative electrode composition in which the negative electrode conductive material is included in an amount of 0.1 part by weight or more and 40 parts by weight or less based on 100 parts by weight of the negative electrode composition.

In another exemplary embodiment, the negative electrode conductive material may be included in an amount of 0.1 part by weight or more and 40 parts by weight or less, preferably 0.2 part by weight or more and 30 parts by weight or less, more preferably 0.4 part by weight or more and 25 parts by weight or less, and most preferably 0.4 part by weight or more and 10 parts by weight or less based on 100 parts by weight of the negative electrode composition.

The negative electrode binder serves to improve the adhesion between negative electrode active material particles and the adhesive strength between the negative electrode active material and the negative electrode current collector and may be classified into an aqueous binder and a non-aqueous binder (organic binder) depending on its solubility in an aqueous solvent such as water. Specific examples of the negative electrode binder may include a carboxymethyl cellulose (CMC)-based binder, a styrene butadiene rubber (SBR)-based binder, a polyacrylic acid (PAA)-based binder, a polyacrylamide (PAM)-based binder, a polyacrylonitrile (PAN)-based binder, polyvinyl alcohol (PVA), polyacrylic acid (PAA), polyethylene glycol (PEG), various copolymers derived therefrom, or a mixture of two or more of these.

In an exemplary embodiment of the present specification, there is provided the negative electrode composition in which a weight average molecular weight of the negative electrode binder is 100,000 g/mol or greater and 1,000,000 g/mol or less.

In the present specification, the weight average molecular weight (Mw) and the number average molecular weight (Mn) are polystyrene-converted molecular weights measured by gel permeation chromatography (GPC) using, as standard materials, monodisperse polystyrene polymers (standard samples) of various degrees of polymerization commercially available for molecular weight measurement. In the present specification, the molecular weight refers to a weight average molecular weight unless particularly described otherwise.

When the weight average molecular weight falls within the above range, the mechanical strength is excellent, and the interaction between molecules is high, resulting in excellent electrode binding force. In addition, when the above range is satisfied, the viscosity of the binder can be set within an appropriate range, leading to excellent coatability of an electrode when a negative electrode is manufactured using the same.

In an exemplary embodiment of the present specification, there is provided the negative electrode composition in which the negative electrode binder is included in an amount of 1 part by weight or more and 20 parts by weight or less based on 100 parts by weight of the negative electrode composition.

In an exemplary embodiment of the present specification, the negative electrode binder may be included in an amount of 20 parts by weight or less, preferably 15 parts by weight or less and 1 part by weight or more, 5 parts by weight or more, or 10 parts by weight or more based on 100 parts by weight of the negative electrode composition.

As described above, when including a negative electrode active material, a negative electrode conductive material, and a negative electrode binder, it may be referred to as a negative electrode composition.

In some cases, a solvent may be added to the negative electrode composition, which may be referred to as a negative electrode slurry. The solvent used herein may be referred to as a solvent for negative electrode slurry formation.

The solvent for negative electrode slurry formation may be, but is not limited to, N-methyl-2-pyrrolidone (NMP), water, or the like.

In the present specification, the negative electrode refers to an electrode that has undergone a series of electrode processes, including a coating step of applying a negative electrode slurry to at least one surface of a negative electrode current collector, a pressing step of pressing the current collector to a certain thickness by roll pressing, and a slitting step of cutting the pressed current collector to fit the electrode specifications.

In an exemplary embodiment of the present specification, the negative electrode can form a negative electrode for a lithium secondary battery by coating a negative electrode slurry including the negative electrode composition to one surface or both surfaces of a current collector.

In an exemplary embodiment of the present specification, a solid content of the negative electrode slurry may fall within a range of 5% or more and 40% or less.

In another exemplary embodiment, the solid content of the negative electrode slurry may fall within a range of 5% or more and 40% or less, preferably 7% or more and 35% or less, and more preferably 10% or more and 30% or less.

The solid content of the negative electrode slurry may refer to a content of the negative electrode composition included in the negative electrode slurry, and may refer to a content of the negative electrode composition based on 100 parts by weight of the negative electrode slurry.

When the solid content of the negative electrode slurry falls within the specified range, the viscosity is appropriate during formation of the negative electrode active material layer, so that particle agglomeration of the negative electrode composition is minimized to efficiently form the negative electrode active material layer.

For other details regarding the negative electrode, information known in the art is applied.

Accordingly, when the above-described electrode is a positive electrode, the electrode current collector layer may be referred to as a positive electrode current collector layer, and the electrode active material layer may be referred to as a positive electrode active material layer. The specific details are as follows.

**EP 4 697 445 A1**

The positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 1 $\mu$m to 500 $\mu$m, and fine irregularities may be formed on a surface of the positive electrode current collector layer to increase the adhesive strength of the positive electrode active material. For example, the positive electrode current collector may be used in various forms, such as a film, a sheet, a foil, a net, a porous body, a foamed body, a non-woven body, and the like.

In an exemplary embodiment of the present specification, a thickness of the positive electrode current collector layer may be 1 $\mu$m or greater and 100 $\mu$m or less, and a thickness of the positive electrode active material layer may be 20 $\mu$m or greater and 500 $\mu$m or less. However, the thickness may vary depending on the type and purpose of the negative electrode used and is not limited thereto.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$, and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn, and Ta, and satisfies $0.01 \leq c3 \leq 0.1$) or $Li_2Mn_3MO_8$ (where M is at least one selected from the group consisting of Fe, Co, Ni, Cu, and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above. When the positive electrode active material, the positive electrode conductive material, and the positive electrode binder are included, it may be referred to as a positive electrode composition, and when the positive electrode composition further includes a solvent for formation of a positive electrode slurry, it can be referred to as a positive electrode slurry.

The positive electrode conductive material is used to impart conductivity to the electrode, and can be used without particular limitation as long as it has electronic conductivity without causing a chemical change in a battery to be configured. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

The positive electrode binder serves to improve the adhesion between positive electrode active material particles and the adhesive strength between the positive electrode active material and the positive electrode current collector. Specific examples of the positive electrode binder include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers derived therefrom, or a mixture of two or more of these.

The solvent, when referring to a solvent for formation of a positive electrode slurry, may include, but is not limited to, N-methyl-2-pyrrolidone (NMP), water, or the like.

In the present specification, the positive electrode refers to an electrode that has undergone a series of electrode processes, including a coating step of applying a positive electrode slurry to at least one surface of a positive electrode current collector, a pressing step of pressing the current collector to a certain thickness by roll pressing, and a slitting step of cutting the pressed current collector to fit the electrode specifications.

For other details regarding the positive electrode, information known in the art is applied.

In the present specification, the electrolyte refers to a material that can be used in the manufacture of a lithium secondary battery, and may include, but is not limited to, an organic liquid electrolyte, an inorganic liquid electrolyte, a solid polymer electrolyte, a gel-type polymer electrolyte, a solid inorganic electrolyte, a molten inorganic electrolyte, and the like.

Specifically, the electrolyte may include a non-aqueous organic solvent and a metal salt.

Specific examples of the non-aqueous organic solvent include aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, and ethyl propionate.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

In the present specification, the separator separates the negative electrode and the positive electrode and provides a migration passage for lithium ions, and can be used without particular limitation as long as the separator is typically used as a separator in a lithium secondary battery. In particular, a separator having high moisture-retention ability for an electrolyte solution as well as a low resistance to the migration of electrolyte solution ions is preferable. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

In the present specification, a lithium secondary battery may be a concept including a battery can accommodating an electrode assembly including a positive electrode, a negative electrode, and a separator, and an electrolyte.

### <Battery Pack>

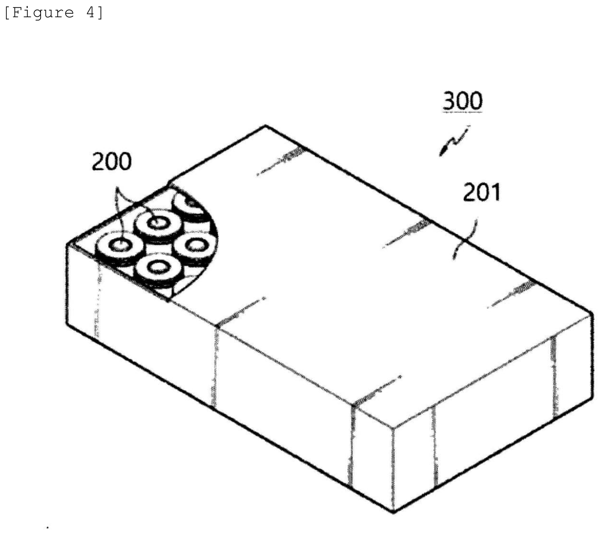

A battery pack of the present specification refers to FIG. 4.

An exemplary embodiment of the present specification provides a battery module and/or a battery pack 300 including the lithium secondary battery 200 as a unit cell.

Since the battery module and/or battery pack includes the lithium secondary battery 200, the contents of the above-described lithium secondary battery can be applied as is.

In the present specification, the battery pack 300 may have a structure in which the lithium secondary battery 200 is included in a pack housing 201. However, the lithium secondary battery 200 may be replaced with a coin type, a pouch type, a square type, or the like, as needed, in addition to the shown cylindrical type.

In some cases, the battery pack of the present specification may include one or more battery module units.

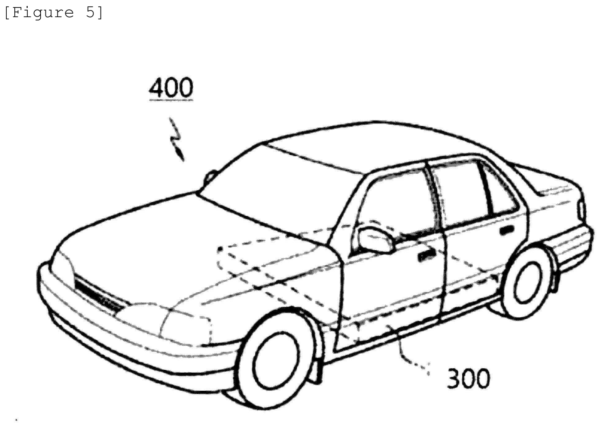

According to FIG. 5, the battery pack 300 can be used as a power source for a medium- to large-sized device selected from the group consisting of a moving means 400 such as an electric vehicle, a hybrid electric vehicle, a plug-in hybrid electric vehicle, and an electric power storage system (EES), as needed.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### Examples <Preparation of Lithium Secondary Battery>

### Example 1

**(1) Preparation of Negative Electrode with Functional Layer**

The functional layers (thickness: 3 $\mu$m) were positioned on one surface of the negative electrode current collector (copper (Cu) thin film, thickness: 8 $\mu$m). Here, the functional layer was provided on one surface of the negative electrode current collector by preparing a slurry, which was obtained by preparing SWCNT and SFG6L as conductive materials and polybenzimidazole as a flame-retardant binder in a weight ratio of 2:70:28 and dispersing them in a solvent (N-methyl-2-pyrrolidone, NMP (solvent for forming a functional layer)), and applying the slurry onto the negative electrode current collector, followed by drying.

After that, a negative electrode slurry was coated on a surface of the negative electrode current collector opposite to the surface in contact with the functional layer and on a surface of the functional layer opposite to the surface in contact with the negative electrode current collector in a loading amount of 3.75 mAh/cm$^2$, which was then dried in a vacuum oven at 130°C for 10 hours and roll-pressed to prepare a negative electrode.

Specifically, the negative electrode slurry was prepared as follows. Graphite and Si/C (average particle size ($D_{50}$) 8 $\mu$m) serving as a negative electrode active material, the first and second conductive materials serving as a conductive material, and polyacrylamide and SBB (styrene butadiene rubber) serving as a binder were prepared in a weight ratio of 80:13:1.6:0.4:2.5:2.5 and added to a solvent (distilled water), resulting in preparation of a negative electrode slurry (solid concentration 35 wt%). Here, the first conductive material was plate-like graphite (specific surface area 17 m$^2$/g, average particle size ($D_{50}$): 3.5 $\mu$m), and the second conductive material was single-walled carbon nanotubes (SWCNT). As a mixing method, the first conductive material, the second conductive material, the binder, and water were dispersed at 2,500 rpm for 30 minutes using a HOMO MIXER (PRIMIX), and then the negative electrode active material was added and dispersed at 2,500 rpm for 30 minutes, resulting in preparation of a negative electrode slurry.

**(2) Preparation of Positive Electrode**

A positive electrode active material (LiN$_{6.1}$Co$_{0.8}$Mn$_{3.1}$O$_2$), a positive electrode conductive material (multi-walled carbon nanotubes, MWCNT), and a binder (PVdF, KF9700) were added to a solvent (N-methyl-2-pyrrolidone, NMP) in a weight ratio of 97.4:1.1:1.5 to prepare a positive electrode slurry (solid concentration 67 wt%). The positive electrode slurry was coated on the positive electrode current collector (aluminum (Al) thin film, thickness: 12 $\mu$m) in a loading amount of 3.6 mAh/cm$^2$ and dried (which were the same as the preparation method of the negative electrode), which was then roll-pressed to prepare a positive electrode where the positive electrode active material layer was formed on the positive electrode current collector.

**(3) Preparation of Lithium Secondary Battery**

An electrode assembly was prepared by interposing a compression-resistant thin film separator (PE 15 $\mu$m) with a ceramic coating of 4 $\mu$m/4 $\mu$m between the negative electrode and the positive electrode. After positioning the electrode assembly inside a battery case, an electrolyte (an electrolyte solution in which 1M LiPF$_6$ was dissolved in a mixed solution of ethylene carbonate (EC): methyl ethyl carbonate (EMC) (=50:50 (volume ratio))) was injected into the case to prepare a lithium secondary battery.

**Example 2**

A lithium secondary battery was prepared in the same manner as in Example 1, except that the functional layer provided on the negative electrode current collector was provided on the positive electrode current collector.

**Example 3**

A lithium secondary battery was prepared in the same manner as in Example 1, except that 15 parts by weight of fluoro phosphazene was additionally used as a flame-retardant, and thus the content of other components (i.e., conductive material) included in the slurry was proportionally reduced.

**Example 4**

A lithium secondary battery was prepared in the same manner as in Example 1, except that regarding the functional layer, the slurry was prepared by preparing SWCNT and graphene as conductive materials and polybenzimidazole as a flame-retardant binder in a weight ratio of 2:75:23.

**Comparative Example 1**

A lithium secondary battery was prepared in the same manner as in Example 1, except that the functional layer provided on the negative electrode current collector was excluded.

**Comparative Example 2**

A lithium secondary battery was prepared in the same manner as in Example 1, except that PAA (poly (meth) acrylic acid) was used instead of polybenzimidazole as a flame-retardant binder when preparing the functional layer provided on the negative electrode current collector.

**Comparative Example 3**

A lithium secondary battery was prepared in the same manner as in Example 1, except that, when preparing the functional layer provided on the negative electrode current collector, polyvinyl alcohol was included as a flame-retardant binder, and SWCNT and graphene as conductive materials and polyvinyl alcohol were dispersed in water in a weight ratio of 2:70:28.

**Comparative Example 4**

A lithium secondary battery was prepared in the same manner as in Example 1, except that polytetrafluoroethylene (PTFE) was used instead of polybenzimidazole as a flame-retardant binder when preparing the functional layer provided on the negative electrode current collector.

**Reference Example 1**

A lithium secondary battery was prepared in the same manner as in Example 1, except that SWCNT was not included as a conductive material when preparing the functional layer provided on the negative electrode current collector.

**Experimental Example.**

**Experimental Example 1: Measurement of Limiting Oxygen Index (LOI)**

The limiting oxygen index was measured for the flame-retardant binder included in each of the functional layers of Examples 1 and 3 and Comparative Examples 2 to 4. The limiting oxygen index was measured using an oxygen index meter (LOI-404 (Industrial Testing Equipment)) in accordance with the ASTM D2863 method, and the evaluation results of the limiting oxygen index are shown in Table 1 below.

[Table 1]

| No. | LOI (%) |
|---|---|
| Example 1 | 42 |
| Example 3 | 51 |
| Comparative Example 2 | 17 |
| Comparative Example 3 | 24 |
| Comparative Example 4 | 95 |

According to Table 1 above, Examples 1 and 3, and Comparative Example 4 had functional layers including polybenzimidazole or PTFE as a flame-retardant binder and had LOIs of 42%, 51%, and 95%, respectively, exceeding 30%, whereas Comparative Examples 2 and 3 had LOIs of 17% and 24%, respectively, falling below 30% even though they had functional layers including PAA and PVA as a flame-retardant binder, respectively.

**Experimental Example 2: Vertical Resistance Measurement**

An Au-plated Cu circular metal plate with a diameter of 2.6 cm was brought into contact with the top and bottom of the electrode (negative electrode or positive electrode) of each of Examples 1 to 4, Comparative Examples 1 to 4, and Reference Example 1, and the electrode resistance in the vertical direction was measured three times, and the average value was taken as the vertical resistance. The evaluation results of vertical resistance are shown in Table 2 below.

[Table 2]

| No. | Vertical resistance ($\Omega$) |
|---|---|
| Example 1 | 0.08 |
| Example 2 | 0.09 |
| Example 3 | 0.10 |
| Example 4 | 0.08 |
| Comparative Example 1 | 0.075 |
| Comparative Example 2 | 0.12 |
| Comparative Example 3 | 0.10 |
| Comparative Example 4 | 0.45 |
| Reference Example 1 | 0.95 |

According to Table 2 above, Examples 1 to 4 and Comparative Examples 1 to 4 all showed vertical resistances of the functional layer of 0.5 $\Omega$ or less. However, Reference Example 1, which did not include a conductive material such as SWCNT in the functional layer, exhibited the vertical resistance of 0.95 $\Omega$, exceeding 0.5 $\Omega$, and thus it was confirmed that it was unsuitable as a functional layer positioned between the electrode active material layer and the electrode current collector. Here, Examples 1 to 4 exhibited vertical resistances of 0.1 $\Omega$ or less, and Comparative Examples 2 to 4 exhibited vertical resistances of 0.1 $\Omega$ or more, showing a difference.

**Experimental Example 3: Stability Test**

A heat pad was placed on one surface of the cell of the lithium secondary batteries of Examples 1 to 4, Comparative Examples 1 to 4, and Reference Example 1, and the temperature of the heat pad was increased until the cell exploded. In this case, the explosion pressure was measured using autoclave equipment.
The reaction time is a value obtained from the test results of the autoclave equipment, and the reaction time is defined as a time from the pressure rise point ($TR_{initial}$) to the maximum pressure reaching point ($TR_{max}$) upon thermal runaway, as indicated by the following Formula 2.

$$[\text{Formula 2}]$$

$$\text{reaction time} = TR_{max} - TR_{initial}$$

In addition, the TR rate is a value obtained by normalizing the cell explosion rate during thermal runaway to the cell capacity using the reaction time value derived from the above Formula 2, and this value (unit: mbar/(sec*mAh)) is also calculated as a test result of the autoclave equipment. The evaluation results are shown in Table 3 below.

[Table 3]

| No. | TR rate (mbar/(sec*mAh)) |
|---|---|
| Example 1 | 4.2 |
| Example 2 | 4.3 |
| Example 3 | 3.7 |
| Example 4 | 4.0 |
| Comparative Example 1 | 5.9 |
| Comparative Example 2 | 5.5 |
| Comparative Example 3 | 5.3 |
| Comparative Example 4 | 4.1 |

(continued)

| No. | TR rate (mbar/(sec*mAh)) |
|---|---|
| Reference Example 1 | 4.6 |

According to Table 3 above, the TR rates of Examples 1 to 4 and Comparative Example 4 were up to 4.3 mbar/(sec*mAh), which was lower than the TR rate values of Comparative Examples 1 to 3 and Reference Example 1. These results suggest that the lithium secondary batteries of Examples 1 to 4 and Comparative Example 4 have improved stability because they have lower cell explosion rates than those of Comparative Examples 1 to 3 and Reference Example 1, even though they have the same capacity.

**Experimental Example 4: Capacity Retention Rate and Life characteristics**

The life of the lithium secondary batteries of Examples 1 to 4, Comparative Examples 1 to 4, and Reference Example 1 was evaluated using an electrochemical charge/discharge tester, and the capacity retention rate was evaluated.

The lithium secondary battery was subjected to an in-situ cycle test at 4.2-3.0 V 1C/0.5C, and during the test, 0.33C/0.33C charge/discharge (4.2-3.0 V) was performed every 50 cycles to calculate the capacity retention rate according to the following Formula 3 (where N is 100). The evaluation results are shown in Table 4 below.

[Formula 3]

$$capacity\ retention\ rate\ (\%) = \frac{discharge\ capacity\ at\ Nth\ cycle}{discharge\ capacity\ at\ first\ cycle} \times 100(\%)$$

[Table 4]

| No. | capacity retention rate (%) after 100 cycles |
|---|---|
| Example 1 | 81 |
| Example 2 | 83 |
| Example 3 | 80 |
| Example 4 | 80 |
| Comparative Example 1 | 82 |
| Comparative Example 2 | 75 |
| Comparative Example 3 | 71 |
| Comparative Example 4 | 54 |
| Reference Example 1 | 32 |

According to Table 4 above, Examples 1 to 4 and Comparative Example 1 exhibited the capacity retention rate of 80% or more, suggesting that the lithium secondary battery with a functional layer (Examples 1 to 4) has no difference in capacity retention rate from the lithium secondary battery without a functional layer (Comparative Example 1). However, despite the presence of the functional layer, the lithium secondary batteries of Comparative Examples 2 and 3, which had the LOI of less than 30%, exhibited low capacity retention rates of 75% and 71%, respectively, indicating that the reduction in capacity retention rate is affected by the complex interrelationship between the functional layer and the electrode current collector layer or electrode active material layer. In addition, in the case of Comparative Example 4, it was confirmed that, although the LOI was as high as 95%, the dispersion and coatability were poor, resulting in the inferior cell resistance exceeding 0.1 Ω and the poor capacity retention rate.

Furthermore, despite the presence of the functional layer, the lithium secondary battery of Reference Example 1 without a conductive material such as SWCNT was found to have the lowest capacity retention rate of 32%. This suggests that the functional layer must have conductivity when introduced between the electrode active material layer and the electrode current collector layer.

**Claims**

1. An electrode comprising:

an electrode current collector layer;
an electrode active material layer; and
a functional layer interposed between the electrode current collector layer and the electrode active material layer,
wherein the functional layer comprises a flame-retardant binder having a limiting oxygen index of 30% or more as measured in accordance with ASTM D2863, and
wherein the flame-retardant binder is one or more selected from a phenolic resin, a novolac resin, a polyimide resin, a polybenzoxazole resin, a polybenzimidazole resin, a polybenzothiazole resin, and a halogenated aromatic resin.

2. The electrode of claim 1, wherein a thickness of the functional layer is 0.1 $\mu$m or more and 10 $\mu$m or less.

3. The electrode of claim 1, wherein the functional layer further comprises a flame-retardant.

4. The electrode of claim 1, wherein the functional layer further comprises a conductive material.

5. The electrode of claim 1, wherein the functional layer comprises 0.1 to 90 parts by weight of a conductive material; and 1 to 99 parts by weight of a flame-retardant binder.

6. The electrode of claim 3, wherein the flame-retardant comprises at least one of an inorganic flame-retardant and an organic flame-retardant.

7. The electrode of claim 4, wherein the conductive material is at least one of a planar conductive material, a linear conductive material, and a point-like conductive material.

8. The electrode of claim 1, wherein the functional layer further comprises a heat-dissipating filler.

9. The electrode of claim 1, wherein the functional layer further comprises graphene.

10. The electrode of claim 9, wherein the functional layer further comprises a single-walled carbon nanotube (SWCNT).

11. The electrode of claim 1, wherein a vertical resistance of the functional layer is 0.5 $\Omega$ or less.

12. A lithium secondary battery comprising:

a first electrode;
a second electrode;
a separator interposed between the first electrode and the second electrode; and
an electrolyte,
wherein at least one of the first electrode and the second electrode is the electrode of any one of claims 1 to 11.

13. A battery pack comprising the lithium secondary battery of claim 12 as a unit cell.

[Figure 1]

[Figure 2]

[Figure 3]

[Figure 4]

[Figure 5]

400

300

## INTERNATIONAL SEARCH REPORT

| | International application No. |
|---|---|
| | **PCT/KR2024/021278** |

| A. | CLASSIFICATION OF SUBJECT MATTER |
|---|---|

**H01M 10/42**(2006.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

H01M 10/42(2006.01); C08J 5/18(2006.01); C08K 3/02(2006.01); C08L 77/00(2006.01); H01M 50/409(2021.01); H01M 50/581(2021.01); H01M 50/586(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 활물질(active material), 기능층(functional layer), 한계 산소 지수 (limiting oxygen index), 바인더(binder)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0144239 A (SAMSUNG SDI CO., LTD.) 26 October 2022 (2022-10-26)<br>See paragraphs [0016]-[0108] and claims 1-16. | 1-13 |
| Y | JP 2000-086890 A (TORAY IND. INC.) 28 March 2000 (2000-03-28)<br>See claims 1-12. | 1-13 |
| A | KR 10-2019-0108792 A (SAMSUNG SDI CO., LTD.) 25 September 2019 (2019-09-25)<br>See claims 1-14. | 1-13 |
| A | KR 10-2022-0111565 A (SAMSUNG SDI CO., LTD.) 09 August 2022 (2022-08-09)<br>See claims 1-18. | 1-13 |
| A | KR 10-2001-0045908 A (SKC CO., LTD.) 05 June 2001 (2001-06-05)<br>See claims 1-5. | 1-13 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 April 2025** | **09 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/021278**

| Patent document cited in search report | | | Publication date (day/month/year) | Patent family member(s) | | | Publication date (day/month/year) |
|---|---|---|---|---|---|---|---|
| KR | 10-2022-0144239 | A | 26 October 2022 | None | | | |
| JP | 2000-086890 | A | 28 March 2000 | JP | 4433512 | B2 | 17 March 2010 |
| KR | 10-2019-0108792 | A | 25 September 2019 | CN | 111868989 | A | 30 October 2020 |
| | | | | EP | 3767725 | A1 | 20 January 2021 |
| | | | | KR | 10-2235277 | B1 | 01 April 2021 |
| | | | | US | 2021-0057702 | A1 | 25 February 2021 |
| | | | | WO | 2019-177296 | A1 | 19 September 2019 |
| KR | 10-2022-0111565 | A | 09 August 2022 | EP | 4290645 | A1 | 13 December 2023 |
| | | | | US | 2023-0335806 | A1 | 19 October 2023 |
| | | | | WO | 2022-169216 | A1 | 11 August 2022 |
| KR | 10-2001-0045908 | A | 05 June 2001 | KR | 10-0457767 | B1 | 17 November 2004 |

Form PCT/ISA/210 (patent family annex) (July 2022)

**REFERENCES CITED IN THE DESCRIPTION**

**Patent documents cited in the description**

- KR 1020230192121
- KR 1020240197936